Europäisches Patentamt

European Patent Office

Office européen des brevets

(19)

(11)  EP 1 434 040 A2

(12)  **EUROPEAN PATENT APPLICATION**

(43) Date of publication:
     **30.06.2004  Bulletin 2004/27**

(51) Int Cl.⁷: $G01F\ 23/36$, $G01F\ 23/00$

(21) Application number: **03029705.5**

(22) Date of filing: **23.12.2003**

(84) Designated Contracting States:
     **AT BE BG CH CY CZ DE DK EE ES FI FR GB GR
     HU IE IT LI LU MC NL PT RO SE SI SK TR**
     Designated Extension States:
     **AL LT LV MK**

(30) Priority:  **25.12.2002  JP 2002373378**

(71) Applicant: **FUJI JUKOGYO KABUSHIKI KAISHA
     Tokyo (JP)**

(72) Inventors:
     • **Ito, Hideki
       Shinjuku-ku Tokyo (JP)**
     • **Mori, Tomokazu
       Shinjuku-ku Tokyo (JP)**

(74) Representative: **VOSSIUS & PARTNER
     Siebertstrasse 4
     81675 München (DE)**

(54)  **Fuel quantity determination method**

(57)     A meter microcomputer (10) provided in the fuel quantity display device(2) is connected to a battery(14) through an ignition switch(12). The meter microcomputer(10) obtains an ON/OFF signal for an accessory terminal(12a) and an ignition terminal(12b) so as to detect an engine start based on the result. Thereafter, the meter microcomputer(10) compares the remaining fuel quantity detected by fuel quantity detection devices (18a,18b) and the remaining fuel quantity stored immediately before the previous turn-OFF operation of the ignition terminal(12b). Based on the result of comparison, the meter microcomputer(10) determines whether the fuel is fed or not. In addition, the meter microcomputer (10) determines a gradient based on an estimated gradient value detected by an AT control microcomputer (20), and calculates a value indicating the remaining fuel quantity, based on the result of determination for fueling and the determination result of a gradient so as to display it on the display meter(24).

FIG.1

EP 1 434 040 A2

## Description

The present invention relates to a fuel quantity display device for displaying a quantity of fuel remaining in a vehicle fuel tank.

The fuel quantity display device is conventionally provided in such a manner that the remaining fuel quantity is detected by a fuel quantity detection device provided in a fuel tank and the detected quantity of the remaining fuel is displayed on a fuel quantity displaymeter. Moreover, the following type of fuel quantity display device exists for displaying a precise quantity of the remaining fuel. In such a fuel quantity display device, the remaining fuel quantity detected by the fuel quantity detection device and the remaining fuel quantity stored immediately before the previous engine stop are compared with each other. Based on the result of the comparison, it is determined whether a fuel was fed or not between the previous engine stop and the current engine start. In this way, even if the fuel was fed, the remaining fuel quantity is precisely displayed (for example, see Japanese Patent Application Laid-Open No. Hei 10-239132).

In addition, since the remaining fuel quantity cannot be precisely detected by a fuel level measurement using the fuel quantity detection device provided in the fuel tank when a vehicle is stopping on a slope, the following type of the fuel quantity display device is used. In this type of fuel quantity display device, a gradient value is obtained by using a clinometer. When the gradient value exceeds a predetermined value, the quantity of a consumed fuel is subtracted from the remaining fuel quantity detected when the vehicle is horizontal so as to calculate the quantity even when the vehicle is on the slope, thereby displaying the precise quantity (for example, see Japanese Patent Application Laid-Open No. Hei 11-190655).

In the fuel quantity display device described in Japanese Patent Application Laid-Open No. Hei 10-239132, however, since the remaining fuel quantity is detected at timing when a starter is operated, an error occurs in a detected value indicating the quantity due to a sudden voltage drop. Therefore, the precise quantity cannot be displayed. Furthermore, the occurrence of the error in the detected value indicating the quantity prevents a precise determination of fueling.

On the other hand, the fuel quantity display device described in Japanese Patent Application Laid-Open No. Hei 11-190655 has problems in that it requires a clinometer and therefore it cannot measure a gradient when the clinometer has any trouble. Furthermore, in the case where the vehicle runs on the slope for a long time, the error occurs because of an evaporated gas between the quantity of fuel consumed by the engine and the quantity of an actually consumed fuel when the quantity is calculated by subtracting the consumed fuel quantity by the engine from the remaining fuel quantity detected when the vehicle runs on a flat surface. Therefore, an accumulation of the errors prevents the display of the precise quantity of the remaining fuel.

In view of the above-mentioned problems, the present invention has an object of providing a fuel quantity display device capable of displaying a precise quantity of a remaining fuel.

The fuel quantity display device according to a first aspect of the present invention, includes: engine start detection means for detecting an engine start; fuel quantity detection means for detecting a quantity of a remaining fuel; and fuel quantity display means for displaying the remaining fuel quantity, based on the quantity, wherein the quantity is detected by the fuel quantity detection means after the detection of the engine start.

According to the fuel quantity display device of the first aspect, since an occurrence of an error in a fuel quantity measurement due to a sudden voltage change upon an operation of a starter can be prevented, the precise quantity of the remaining fuel can be detected and displayed.

The fuel quantity display device according to a second aspect of the present invention, further includes: fueling determination means for determining whether a fuel operation is done or not; gradient value determination means for determining a gradient value of a road on which a vehicle is situated; and fuel quantity correction means for correcting the remaining fuel quantity displayed on the basis of determination results by the fueling determination means and by the gradient value determination means, wherein the remaining fuel quantity corrected by the fuel quantity correction means is displayed on the fuel quantity display means.

According to the fuel quantity display device of the second aspect, since a precise quantity of the remaining fuel can be detected, the fueling can be precisely determined. Furthermore, since the remaining fuel quantity can be corrected when the vehicle runs on a slope, the precise quantity of the remaining fuel can be displayed.

In the fuel quantity display device according to a third aspect of the present invention, the engine start detection means detects an engine start based on a switching of an accessory terminal from OFF to ON after an ignition terminal is turned ON.

In the fuel quantity display device according to a fourth aspect of the present invention, engine start detection means detects an engine start based on the switching of a starter terminal from ON to OFF after the ignition terminal is turned ON.

According to the fuel quantity display device of the third and fourth aspects, the engine start can be detected. Therefore, at a recovery of a voltage which has dropped before the engine start, the remaining fuel quantity can be detected. Furthermore, even if the engine is not started, the fueling and the gradient are determined based on ON/OFF states of the accessory terminal and the starter terminal. Therefore, the precise quantity of the remaining fuel can be detected and displayed.

In the fuel quantity display device according to a fifth aspect of the present invention, the gradient value determination means detects a gradient value of the road, based on an estimated gradient value from a detected value of an acceleration sensor for an anti-lock brake system or the estimated gradient value obtained from a microcomputer for automatic transmission control.

According to the fuel quantity display device of the fifth aspect, the gradient determination means does not require any sensors for a gradient measurement.

The fuel quantity display device according to a sixth aspect of the present invention, includes: fuel quantity detection means for detecting the remaining fuel quantity; fuel quantity display means for displaying the remaining fuel quantity; average gradient value calculation means for calculating an average gradient value of the road on which the vehicle is situated; flat plane determination means for determining whether the road on which the vehicle is situated is flat or not, based on the average gradient value calculated by the average gradient value calculation means; and fuel quantity correction means for correcting the remaining fuel quantity, which is displayed on the fuel quantity display means based on the remaining fuel quantity, based on the result of determination, wherein the remaining fuel quantity corrected by the fuel quantity correction means is displayed on the fuel quantity display means.

According to the fuel quantity display device of the sixth aspect, since the average gradient value is first calculated so as to determine whether the road is flat or not, based on the calculated average gradient value, the gradient can be precisely determined to display the precise quantity of the remaining fuel.

The fuel quantity display device according to a seventh aspect of the present invention, further includes: vehicle stop detection means for detecting a vehicle stop; and average gradient value initialization means for initializing the average gradient value in a case where the vehicle stop is detected by the vehicle stop detection means.

In the fuel quantity display device according to an eighth aspect of the present invention, the average gradient value initialization means initializes the average gradient value after an elapse of a predetermined period of time from the vehicle stop.

According to the fuel quantity display device of the seventh and eighth aspects, since the average gradient value is initialized when the vehicle is stopped, a time constant, which is used for average gradient value calculation performed for eliminating a change in acceleration between before and after the vehicle stop, can be set to a large value. Thus, the effects of an acceleration before and after the vehicle stop can be reduced, thereby allowing the detection of the precise quantity of the remaining fuel.

In the fuel quantity display device according to a ninth aspect of the present invention, the average gradient value initialization means initializes the average gradient value with an average gradient value calculated within a certain period of time before the initialization.

According to the fuel quantity display device of the ninth aspect, the effects of the acceleration immediately before the vehicle stop and immediately after a vehicle start or acceleration effects due to a delay in detection of the vehicle start can be eliminated. Thus, a precise average gradient value can be calculated so as to display the precise quantity of the remaining fuel.

In the fuel quantity display device according to a tenth aspect of the present invention, the average gradient value initialization means initializes the average gradient value only once during the vehicle stop.

According to the fuel quantity display device of the tenth aspect, since the estimated gradient value remains unchanged in the case where the vehicle is stopped and stabilized, it is not necessary to initialize the average gradient value for several times. Therefore, the effects of a change in the acceleration at the vehicle start can be prevented.

In the fuel quantity display device according to an eleventh aspect of the present invention, the average gradient value calculation means calculates an average gradient value of the road, based on an estimated gradient value estimated from a detected value of an acceleration sensor for an anti-lock brake system.

According to the fuel quantity display device of the eleventh aspect, the gradient determination means does not require any sensors for a gradient measurement.

A fuel quantity display device according to a twelfth aspect of the present invention, includes: fuel quantity detection means for detecting the remaining fuel quantity; fuel quantity display means for displaying the remaining fuel quantity; average gradient value calculation means for calculating the average gradient value of the road on which the vehicle is situated; slope determination means for determining whether the vehicle has been situated on the slope for a predetermined period of time or not, based on the average gradient value calculated by the average gradient value calculation means; and fuel quantity correction means for correcting the remaining fuel quantity displayed on the fuel quantity display means on the basis of the remaining fuel quantity in a case where the slope determination means determines that the vehicle has been situated on the slope for a long time, wherein the remaining fuel quantity corrected by the fuel quantity correction means is displayed on the fuel quantity display means.

In the fuel quantity display device according to a thirteenth aspect of the present invention, the fuel quantity correction means changes a method of calculating the quantity of the fuel from that based on the quantity of the fuel injection to that based on the detection of the remaining fuel quantity in a fuel tank so as to correct the remaining fuel quantity displayed on the fuel quantity display means.

The fuel quantity display device according to a fourteenth aspect of the present invention, the slope determination means determines whether the vehicle has been situated on the slope or not, based on two average gradient values, each having a different time constant.

According to the fuel quantity display device of the twelfth to fourteenth aspects, even in the case where the vehicle is situated on the slope for a long time or even in the case where any trouble occurs in obtainment of the estimated gradient value, the precise quantity of the remaining fuel can be displayed without an error.

In the fuel quantity display device according to a fifteenth aspect of the present invention, the average gradient value calculation means calculates an average gradient value of the road, based on an estimated gradient value estimated from a detected value of an acceleration sensor for an anti-lock brake system or the estimated gradient value obtained from a microcomputer for an automatic transmission control.

According to the fuel quantity display device of the fifteenth aspect, the gradient determination means does not require any sensors for gradient measurement.

The fuel quantity display device according to a sixteenth aspect of the present invention, includes: the gradient determination means for determining the gradient of the road on which the vehicle is situated; fueling determination means for determining whether the fuel is fed or not by using different criteria for a case where the road is determined as the slope and for the case where the road is determined as flat, based on the result of determination by the gradient determination means; fuel quantity calculation means for obtaining the remaining fuel quantity on the basis of the result of determination by the fueling determination means; and fuel quantity display means for displaying the remaining fuel quantity obtained by the fuel quantity calculation means.

According to the fuel quantity display device of the sixteenth aspect, it can be precisely determined whether the fuel is fed or not, based on the result of determination that the road is inclined or flat. Moreover, since the remaining fuel quantity is detected, based on the result of precise determination of the fueling, the precise quantity of the remaining fuel can be displayed.

In the fuel quantity display device according to a seventeenth aspect of the present invention, the gradient determination means determines the gradient of the road, based on an estimated gradient value estimated from a detected value of an acceleration sensor for an anti-lock brake system or an estimated gradient value obtained from a microcomputer for automatic transmission control.

According to the fuel quantity display device of the seventeenth aspect, the gradient determination means does not require any sensors for gradient measurement.

These and other obj ects and advantages of the present invention will become understood from the following description with reference to the accompanying drawings, wherein:

Fig. 1 is a schematic view showing a fuel quantity display device according to a first embodiment of the present invention;
Fig. 2 is a flowchart showing an operation of the fuel quantity display device according to the first embodiment of the present invention;
Fig. 3 is a schematic view showing the fuel quantity display device according to a second embodiment of the present invention;
Fig. 4 is a flowchart showing the operation of the fuel quantity display device according to the second embodiment of the present invention;
Fig. 5 is a flowchart showing the operation of the fuel quantity display device according to a third embodiment of the present invention;
Fig. 6 is a schematic view showing the fuel quantity display device according to a fourth embodiment of the present invention;
Fig. 7 is a flowchart showing the operation of the fuel quantity display device according to the fourth embodiment of the present invention;
Fig. 8 is another flowchart showing the operation of the fuel quantity display device according to the fourth embodiment of the present invention;
Fig. 9 is the flowchart showing the operation of the fuel quantity display device according to a fifth embodiment of the present invention; and
Fig. 10 is a flowchart showing the operation of the fuel quantity display device according to the fifth embodiment of the present invention.

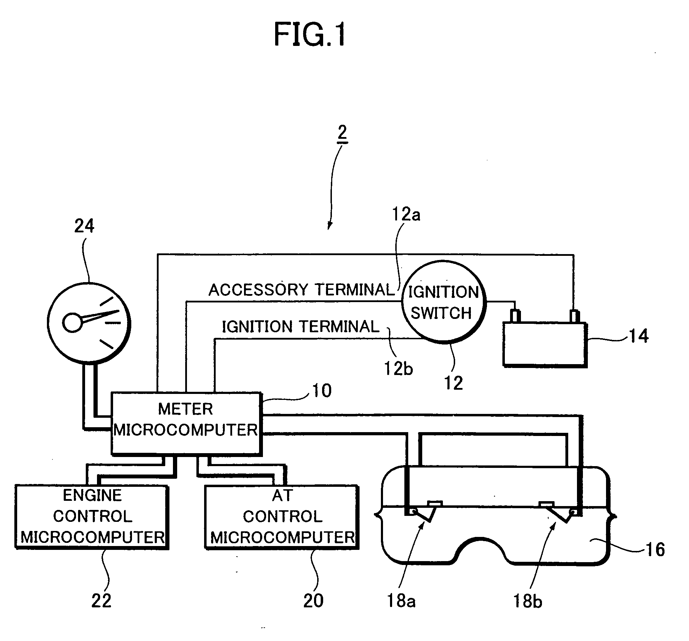

Hereinafter, preferred embodiments of the present invention will be described with reference to the accompanying drawings. Fig. 1 is a schematic view illustrating a fuel quantity display device 2 according to a first embodiment of the present invention.

The fuel quantity display device 2 includes a meter microcomputer 10 for controlling an entire device and for storing a remaining fuel quantity to be displayed. The meter microcomputer 10 is connected to a battery 14 via an ignition switch 12. The ignition switch 12 has four positions: an OFF position, an accessory position, an ignition position, and a starter position. When the ignition switch 12 is at the accessory position, an accessory terminal 12a is turned ON. At the ignition position, the accessory terminal 12a and an ignition terminal 12b are turned ON. At the starter position, the ignition terminal 12b and a starter terminal 12c are turned ON, whereas the accessory terminal 12a is turned OFF.

An ON/OFF signal for the accessory terminal 12a and the ignition terminal 12b is input to the meter microcomputer 10. The meter microcomputer 10 is connected to fuel quantity detection devices 18a and 18b provided in a fuel tank 16. Each of the fuel quantity detection devices 18a and 18b includes: a float which is floating on a liquid fuel surface; and a float arm for pivotably supporting the float about an arm axis serving as a supporting point. The meter microcomputer 10 is connected to an automatic transmission (AT) control microcomputer 20, from which an estimated gradient value of the surface is input. In addition, the meter microcomputer 10 is also connected to an engine control microcomputer 22, from which the quantity of consumed fuel is input. Furthermore, the meter microcomputer 10 is connected to a fuel quantity display meter 24. The meter microcomputer 10 outputs a value indicating a remaining fuel quantity to display the value on the fuel quantity display meter 24.

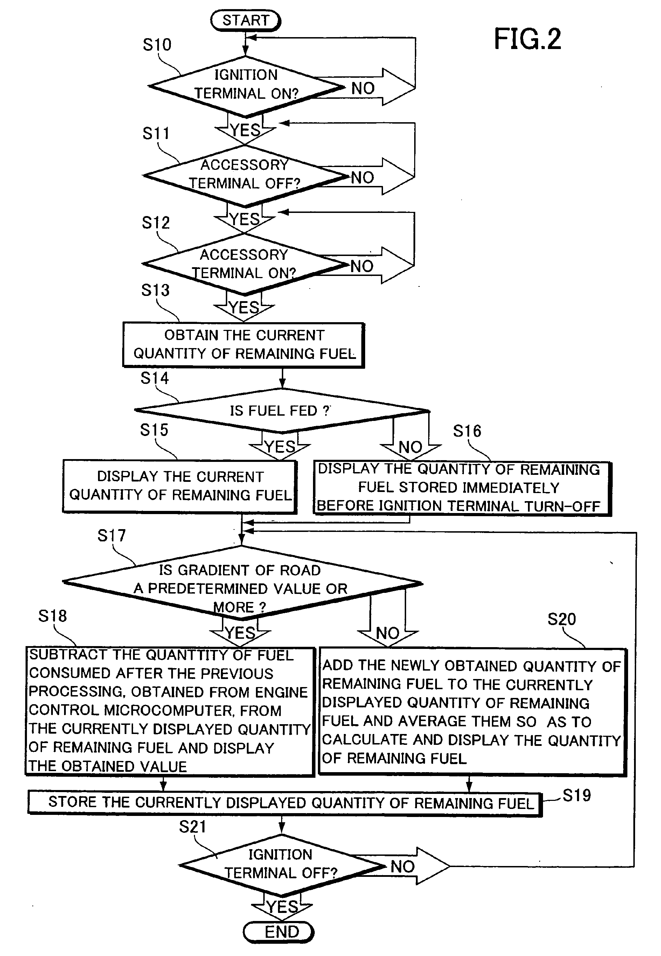

Next, the operation of the fuel quantity display device 2 according to the first embodiment will be described with reference to a flowchart shown in Fig. 2.

First, the meter microcomputer 10 determines whether the ignition terminal 12b is turned ON or not (step S10). If it is determined that the ignition terminal 12b is ON at the step S10, the meter microcomputer 10 determines whether the accessory terminal 12a is turned OFF or not (step S11). On the other hand, if it is determined that the ignition terminal 12b is not in an ON state at the step S10, the determination at the step S10 is repeated until it is determined that the ignition terminal 12b is in an ON state.

The ignition switch 12 has the function of shutting off the accessory terminal 12a when the starter is operated. Therefore, if it is determined that the accessory terminal 12a is in the OFF state at the step S11, it is determined that the starter is operated. On the other hand, if it is determined that the accessory terminal 12a is not in the OFF state, it is determined that the starter is not operated. In this case, the determination at the step S11 is repeated until it is determined that the accessory terminal 12a is in the OFF state.

Next, the meter microcomputer 10 determines if the accessory terminal 12a is turned ON or not (step S12). If it is determined that the accessory terminal 12a is turned ON at the step S12, it is determined that the starter was stopped after the starting operation. On the other hand, if it is determined that the accessory terminal 12a is not in the ON state at the step S12, it is determined that the starter was not stopped after the starting operation. Therefore, the determination at the step S12 is repeated until it is determined that the accessory terminal 12a is in the ON state. More specifically, the meter microcomputer 10 detects an engine start based on the results of determinations at the steps S11 and S12.

Next, the meter microcomputer 10 obtains an electric signal such as an electric resistance indicating the remaining fuel quantity detected by the fuel quantity detection devices 18a and 18b (step S13). The meter microcomputer 10 compares the remaining fuel quantity detected by the fuel quantity detection devices 18a and 18b and the remaining fuel quantity stored immediately before the previous turn-OFF operation of the ignition terminal 12b with each other. The meter microcomputer 10 determines whether the fuel was fed or not between the previous turn-OFF operation of the ignition terminal 12b and the current engine start, based on the result of comparison (step S14).

More specifically, if a value obtained by subtracting the remaining fuel quantity stored immediately before the previous turn-OFF operation of the ignition terminal 12b from the remaining fuel quantity detected by the fuel quantity detection devices 18a and 18b exceeds a predetermined value, the meter microcomputer 10 determines that the fuel was fed between the previous turn-OFF operation of the ignition terminal 12b and the current engine start. On the contrary, if the value does not exceed the predetermined value, the meter microcomputer 10 determines that no fuel was fed between the previous turn-OFF operation of the ignition terminal 12b and the current engine start.

Next, if it is determined that the fuel was fed at the step S14, the meter microcomputer 10 displays the value indicating the remaining fuel quantity detected by the fuel quantity detection devices 18a and 18b on the fuel quantity display meter 24 (step S15). On the contrary, if it is determined that no fuel was fed at the step S14, the value indicating the remaining fuel quantity stored immediately before the previous turn-OFF operation of the ignition terminal 12b is displayed on the fuel quantity display meter 24 (step S16).

Next, an estimated gradient value is obtained from the AT control microcomputer 20 including a calculation circuit for estimating a gradient of the road. The meter microcomputer 10 determines whether the estimated gradient value obtained from the AT control microcomputer 20 exceeds the predetermined value or not (step S17).

If the estimated gradient value obtained at the step S17 exceeds the predetermined value, the quantity of the fuel consumed after the previous processing is obtained from the engine control microcomputer 22. Next, the meter microcomputer 10 displays, on the fuel quantity display meter 24, the value obtained by subtracting the above-mentioned quantity of consumed fuel obtained by the engine control microcomputer 22 from the remaining fuel quantity displayed on the fuel quantity display meter 24 (step S18). Then, the meter microcomputer 10 stores the displayed value (step S19).

On the other hand, if the estimated gradient value obtained from the AT control microcomputer 20 does not exceed the predetermined value at the step S17, the meter microcomputer 10 adds the remaining fuel quantity newly detected by the fuel quantity detection devices 18a and 18b to the remaining fuel quantity displayed on the fuel quantity display meter 24 so as to average them. The value obtained by the averaging processing is displayed on the fuel quantity display meter 24 (step S20). Then, the meter microcomputer 10 stores the displayed value (step S19).

Next, the meter microcomputer 10 determines whether the ignition terminal 12b is turned OFF or not (step S21). If it is determined that the ignition terminal 12b is in the OFF state at the step S21, the meter microcomputer 10 terminates the operation of the fuel quantity display device 2. On the other hand, if it is determined that the ignition terminal 12b is not in the OFF state at the step S21, the procedure returns to the step S17 so as to repeat the operations at the steps S17 to S21 until it is determined that the ignition terminal 12b is in the OFF state at the step S21.

According to the fuel quantity display device of the first embodiment of the present invention, the fuel quantity detection devices detect the remaining fuel quantity after the starter is operated, and then stopped. Therefore, since the occurrence of an error in a fuel quantity measurement due to a sudden voltage change upon the operation of the starter can be prevented, a precise quantity of the remaining fuel can be detected. Moreover, since the precise quantity of the remaining fuel can be detected, it can be precisely determined whether the fuel should be fed or not.

Furthermore, according to the fuel quantity display device of the first embodiment of the present invention, when a vehicle is on a slope, displayed on the fuel quantity display meter 24 is not the remaining fuel quantity detected by the fuel quantity detection devices but the value obtained by subtracting the quantity of the fuel consumed after the previous processing, which is obtained by the engine control microcomputer 22, from the remaining fuel quantity displayed on the fuel quantity display meter 24. More specifically, although an error occurs in the fuel quantity measurement by the fuel quantity detection devices 18a and 18b when the vehicle is on the slope, the precise quantity of the remaining fuel can be detected without any errors according to the device of the present invention.

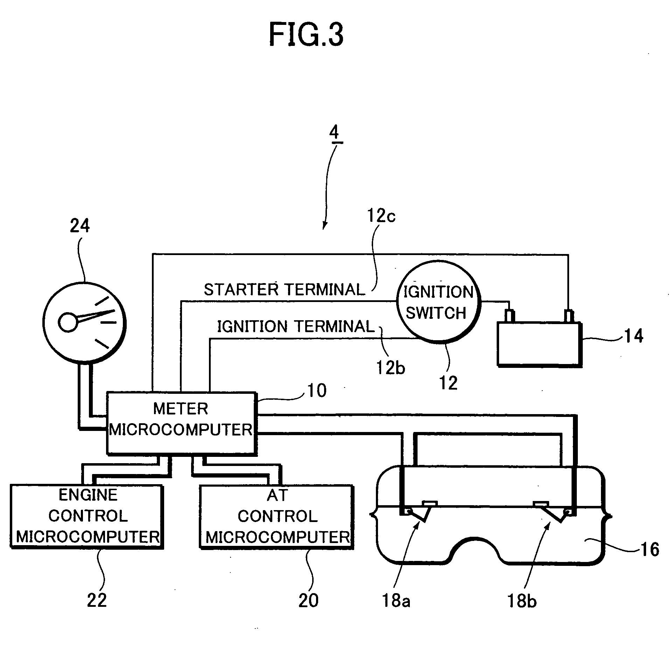

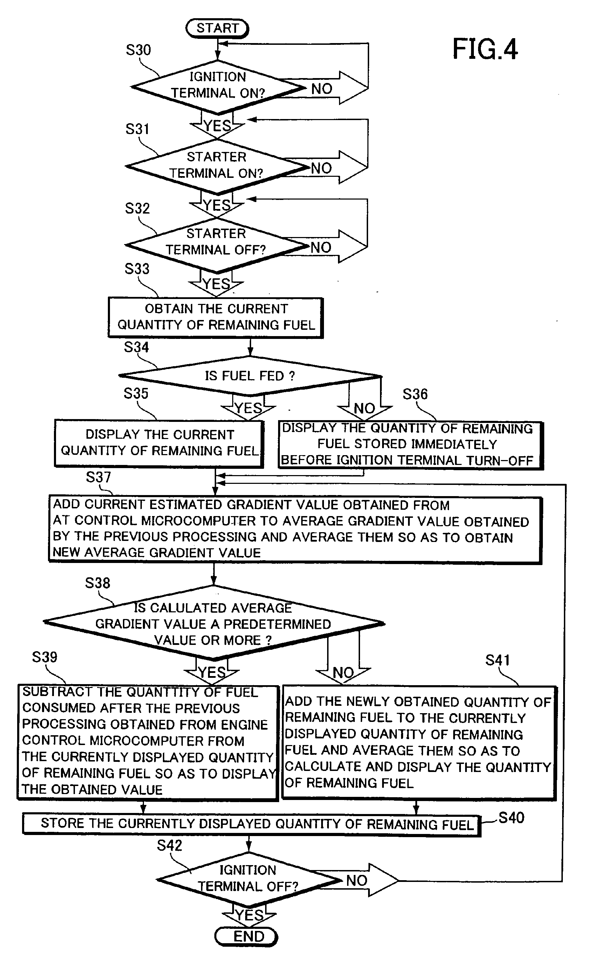

Next, a fuel quantity display device 4 according to a second embodiment of the present invention will be described with reference to Figs. 3 and 4.

Fig. 3 is a schematic view illustrating the fuel quantity display device 4 according to the second embodiment. In the following description of the fuel quantity display device 4 according to the second embodiment, the same components as those of the fuel quantity display device 2 according to the first embodiment are denoted by the same reference numerals as those used in the first embodiment.

Although an ON/OFF signal for the accessory terminal 12a and the ignition terminal 12b is input to the meter microcomputer 10 in the fuel quantity display device 2 according to the first embodiment, an ON/OFF signal for the starter terminal 12c and the ignition terminal 12b is input to the meter microcomputer 10 in the fuel quantity display device 4 according to the second embodiment. The fuel quantity display device 4 otherwise has the same configuration as that of the fuel quantity display device 2 according to the first embodiment.

Next, the operation of the fuel quantity display device 4 according to the second embodiment will be described with reference to a flowchart shown in Fig. 4.

First, the meter microcomputer 10 determines whether the ignition terminal 12b is turned ON or not (step S30). If it is determined that the ignition terminal 12b is turned ON at the step S30, the meter microcomputer 10 determines whether the starter terminal 12c is turned ON or not (step S31). On the other hand, if it is determined that the ignition terminal 12b is not in the ON state at the step S30, determination at the step S30 is repeated until it is determined that the ignition terminal 12b is in the ON state.

Next, if it is determined that the starter terminal 12c is in the ON state at the step S31, the meter microcomputer 10 determines whether the starter terminal 12c is turned OFF or not (step S32). On the other hand, if it is determined that the starter terminal 12c is not in the ON state at the step S31, the determination at the step S31 is repeated until it is determined that the starter terminal 12c is in the ON state.

Next, if it is determined that the starter terminal 12c is in the OFF state at the step S32, the meter microcomputer 10 determines that the starter was stopped after the starting operation. On the other hand, if it is determined that the starter terminal 12c is not in the OFF state at the step S32, it is determined that the starter is not stopped after the starting operation. Then, the determination at the step S32 is repeated until it is determined that the starter terminal 12c is in the OFF state. More specifically, the meter microcomputer 10 detects an engine start, based on the results of the determinations at the steps S31 and S32.

Next, the meter microcomputer 10 obtains the current quantity of the remaining fuel detected by the fuel quantity detection devices 18a and 18b (step S33) to determine whether the fuel was fed or not (step S34). If it is determined that the fuel was fed at the step S34, the value indicating the remaining fuel quantity detected by the fuel quantity detection devices 18a and 18b is displayed on the fuel quantity display meter 24 (step S35).

On the other hand, if it is determined that no fuel was not fed at the step S34, the meter microcomputer 10 displays the value indicating the remaining fuel quantity stored immediately before the previous turn-OFF operation of the ignition terminal 12b on the fuel quantity display meter 24 (step S36).

Next, the meter microcomputer 10 obtains an estimated gradient value from the AT control microcomputer 20. The meter microcomputer 10 adds the previously obtained average gradient value to the currently obtained estimated gradient value to average them, thereby obtaining a new average gradient value (step S37).

Next, the meter microcomputer 10 determines whether the average gradient value exceeds the predetermined value or not (step S38). If the average gradient value exceeds the predetermined value at the step S38, the quantity of the fuel consumed after the previous processing is obtained from the engine control microcomputer 22. Next, the value obtained by subtracting the obtained quantity of the consumed fuel from the remaining fuel quantity displayed on the fuel quantity display meter 24 is displayed on the fuel quantity display meter 24 (step S39). Then, the meter microcomputer 10 stores the displayed value (step S40).

On the other hand, if the average gradient value calculated at the step S38 does not exceed the predetermined value, the value obtained by adding the remaining fuel quantity newly detected by the fuel quantity detection devices 18a and 18b to the remaining fuel quantity displayed on the fuel quantity display meter 24 and then averaging them is displayed on the fuel display meter 24 (step S41). Then, the meter microcomputer 10 stores the displayed value (step S40).

Next, the meter microcomputer 10 determines whether the ignition terminal 12b is turned OFF or not (step S42). If it is determined that the ignition terminal 12b is in the OFF state at the step S42, the meter microcomputer 10 terminates the operation of the fuel quantity display device 4. On the other hand, if it is determined that the ignition terminal 12b is not in the OFF state at the step S42, the procedure returns to the step S37 so as to repeat the operations at the steps S37 to S42 until the ignition terminal 12b is in the OFF state at the step S42.

According to the fuel quantity display device 4 of the second embodiment described above, the remaining fuel quantity is detected after the detection of an engine start. Therefore, since the occurrence of an error in a fuel quantity measurement due to a sudden voltage change upon the operation of the starter can be prevented, the precise quantity of the remaining fuel can be detected to allow a precise determination of fueling. Moreover, when a vehicle is running on a slope, the value obtained by subtracting the quantity of the fuel consumed after the previous processing from a displayed value indicating the remaining fuel quantity is determined as the value of the remaining fuel quantity. Thus, even on the slope, the precise quantity of the remaining fuel can be displayed.

Furthermore, according to the fuel quantity display device of the second embodiment, the value obtained by averaging the estimated gradient values obtained from the AT control microcomputer 20 is regarded as an average gradient value, so that it is determined whether the road is a slope or not, based on the obtained average gradient value. Therefore, in the case where the vehicle is stopped on the slope, even if the estimated gradient value obtained from the AT microcomputer 20 is zero, a calculated average gradient value does not become zero. Therefore, the gradient can be precisely determined, so that the precise quantity of the remaining fuel can be detected.

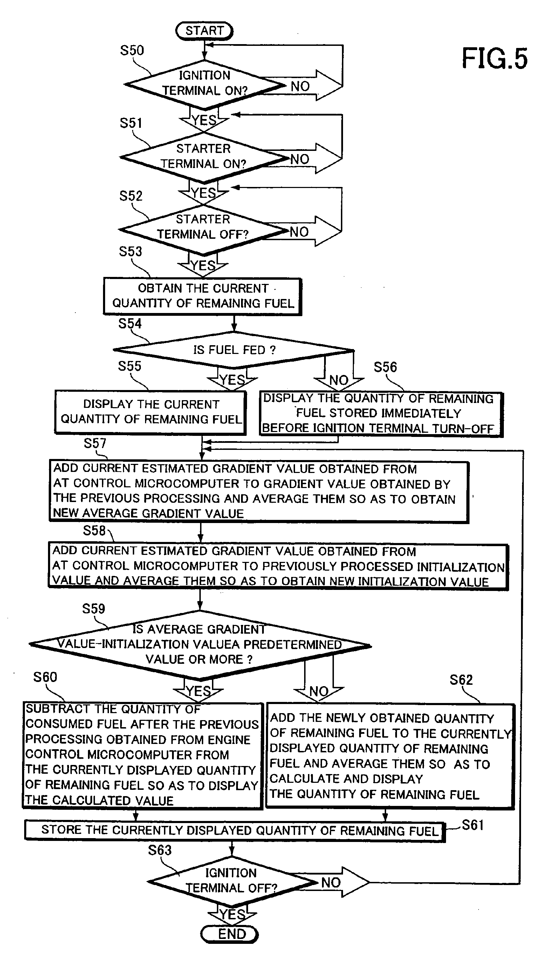

Next, the fuel quantity display device according to a third embodiment of the present invention will be described with reference to Fig. 5. The fuel quantity display device according to the third embodiment has the same structure as that of the fuel quantity display device 4 shown in Fig. 3 according to the second embodiment.

The operation of the fuel quantity display device according to the third embodiment will now be described with reference to the flowchart shown in Fig. 5.

First, the meter microcomputer 10 determines whether the ignition terminal 12b is turned ON or not (step S50). If it is determined that the ignition terminal 12b is in the ON state at the step S50, it is then determined whether the starter terminal 12c is turned ON or not (step S51). If it is determined that the starter terminal 12c is in the ON state at the step S51, it is determined whether the starter terminal 12c is then turned OFF or not (step S52). If it is determined that the starter terminal 12c is in the OFF state at the step S52, the meter microcomputer 10 determines that the starter is stopped after the starting operation, thereby determining that an engine starts.

Next, the remaining fuel quantity is obtained (step S53). It is then determined whether the value obtained by subtracting the remaining fuel quantity stored immediately before the previous turn-OFF operation of the ignition terminal 12b from the remaining fuel quantity detected by the fuel quantity detection devices 18a and 18b exceeds the predetermined value or not. Based on the result of determination, it is determined whether the fuel was fed or not (step S54).

If it is determined that the fuel was fed at the step S54, the value detected by the fuel quantity detection devices 18a and 18b is displayed on the fuel quantity display meter 24 (step S55). On the other hand, if it is determined that no fuel was fed at the step S54, the remaining fuel quantity stored immediately before the previous turn-OFF operation of the ignition terminal 12b is displayed on the fuel quantity display meter 24 (step S56). Next, the value obtained by adding a previously stored average gradient value to an estimated gradient value obtained from the AT control microcomputer 20 and then averaging them is regarded as a new average gradient value (step S57).

Next, the meter microcomputer 10 adds the previously obtained gradient initialization value to the estimated gradient value obtained from the AT control microcomputer 20 and then averages them. The thus calculated value is obtained as a new gradient initialization value (step S58). At this step, a time constant used for averaging the process is set to the value which is significantly larger (for example, one hour or more) than that used for calculating the average gradient value obtained at the step S57.

Next, the meter microcomputer 10 determines whether the value obtained by subtracting the new gradient initialization value calculated at the step S58 from the average gradient value calculated at the step S57 exceeds the predetermined value or not (step S59). If the value calculated at the step S59 exceeds the predetermined value, the meter microcomputer 10 obtains the quantity of fuel consumed after the previous processing from the engine control microcomputer 22. Next, the value obtained by subtracting the obtained quantity of the consumed fuel from the remaining fuel quantity displayed on the fuel quantity display meter 24 is displayed on the fuel quantity display meter 24 (step S60). Then, the meter microcomputer 10 stores the displayed value (step S61).

On the other hand, if the value calculated at the step S59 does not exceed the predetermined value, the meter microcomputer 10 adds the remaining fuel quantity newly detected by the fuel quantity detection devices 18a and 18b to the remaining fuel quantity displayed on the fuel quantity display meter 24 to average them. Thus obtained value is displayed on the fuel quantity display meter 24 (step S62). Then, the meter microcomputer 10 stores the displayed value (step S61).

Next, the meter microcomputer 10 determines whether the ignition terminal 12b is turned OFF or not (step S63). If it is determined that the ignition terminal 12b is in the OFF state at the step S63, the meter microcomputer 10 terminates the operation of the fuel quantity display device. On the other hand, if it is determined that the ignition terminal 12b is not in the OFF state at the step S63, the procedure returns to the step S57 so as to repeat the operations at the steps S57 to S63 until it is determined that the ignition terminal 12b is in the OFF state.

According to the fuel quantity display device of the third embodiment, since the occurrence of the error in the fuel quantity measurement due to a sudden voltage drop upon operation of the starter can be prevented, the precise remaining fuel quantity can be detected. As a result, it can be precisely determined whether the fuel should be fed or not. Moreover, since the occurrence of the error in the fuel quantity measurement by the fuel quantity detection devices when the vehicle runs on a slope can be prevented, the precise quantity of the remaining fuel can be detected. Furthermore, when the vehicle is stopped on a slope, a gradient of the slope can be precisely determined, thereby allowing the precise quantity of the remaining fuel to be displayed.

Furthermore, according to the fuel quantity display device of the third embodiment, it is determined whether the road is a slope or not, based on the value obtained by subtracting the gradient initialization value from the calculated average gradient value. Therefore, a shift of a point 0 due to a change with an elapse of time and a variation in parts, can be corrected, thereby allowing the precise quantity of the remaining fuel to be displayed. Furthermore, in the case where any trouble occurs in the AT control microcomputer, there is a possibility that an average gradient value which makes the road be determined as a slope may be continuously calculated. In this embodiment, however, since the gradient is determined based on the value obtained by subtracting the gradient initialization value from the calculated average gradient value, the road can be prevented from being continuously determined as a slope. Therefore, the precise quantity of the remaining fuel can be displayed. More specifically, in the case where the vehicle runs on the slope for a long time, the average gradient value becomes equal to the gradient initialization value. Therefore, the remaining fuel quantity is detected, not based on the subtraction of the quantity of consumed fuel, but by the fuel quantity detection devices. Thus, the effects of an error corresponding to the quantity of evaporated fuel, which may otherwise occur in the case where the remaining fuel quantity is detected based on the subtraction of the quantity of consumed fuel for a long time, can be prevented, so that a more precise quantity of the remaining fuel can be displayed.

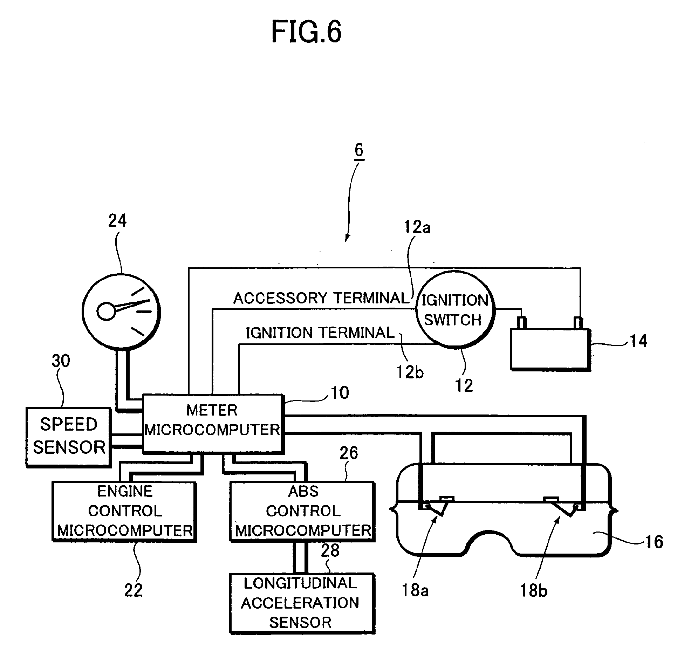

Next, the fuel quantity display device according to the fourth embodiment of the present invention will be described with reference to Figs. 6 to 8.

Fig. 6 is a schematic view illustrating a fuel quantity display device 6 according to a fourth embodiment. In the description of the fuel quantity display device 6 according to the fourth embodiment, the same components as those of the fuel quantity display device 2 according to the first embodiment are denoted by the same reference numerals.

The fuel quantity display device 6 according to the fourth embodiment includes the meter microcomputer 10 for controlling the entire device and for storing the remaining fuel quantity to be displayed. The meter microcomputer 10 includes a counter (not shown) and a timer (not shown). Instead of the AT control microcomputer 22 as in the fuel quantity display device 2 according to the first embodiment, an anti-lock brake system (ABS) control microcomputer 26 and a speed sensor 40 are connected to the meter microcomputer 10. A forward and backward acceleration sensor 28 is connected to the ABS control microcomputer 26. The fuel quantity display device 6 has the same structure as that of the fuel quantity display device 2 according to the first embodiment.

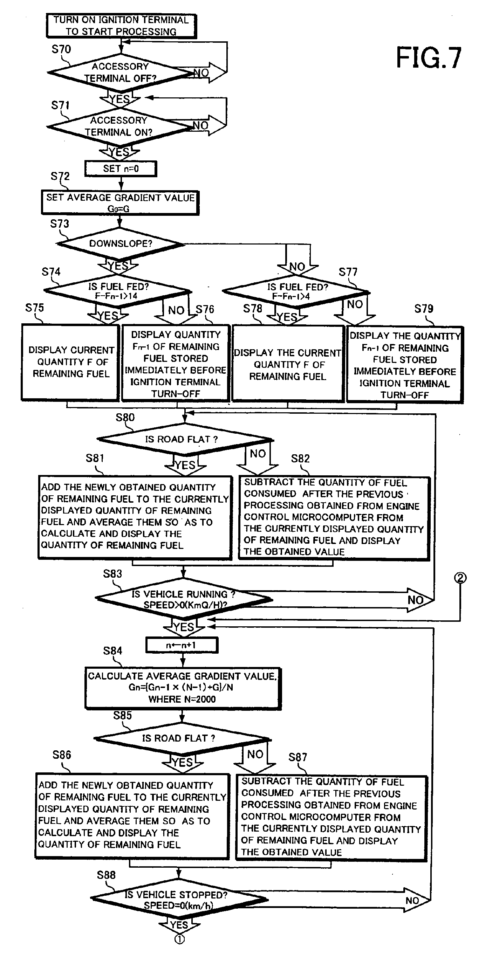

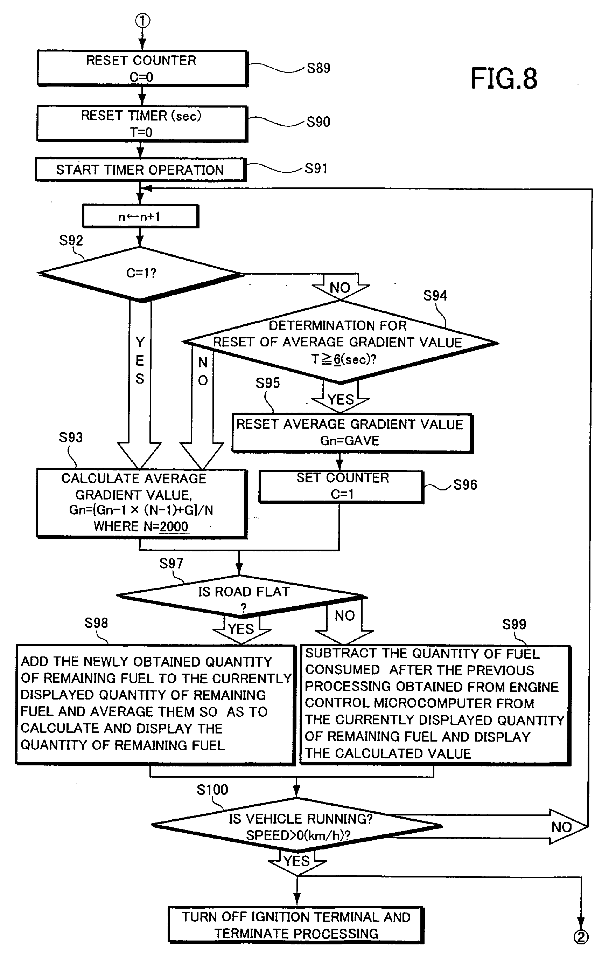

The operation of the fuel quantity display device 6 according to the fourth embodiment will now be described with reference to flowcharts shown in Figs. 7 and 8.

First, the meter microcomputer 10 determines whether the accessory terminal 12a is turned OFF or not after the ignition terminal 12b is turned ON (step S70). If it is determined that the accessory terminal 12a is in the OFF state at the step S70, it is determined whether the accessory terminal 12a is then turned ON or not (step S71). On the other hand, if it is determined that the accessory terminal 12a is not in the OFF state at the step S70, the determination at the step S70 is repeated until it is determined that the accessory terminal 12a is in the OFF state.

Next, if it is determined that the accessory terminal 12a is in the ON state at the step S71, a suffix n of a gradient value G, which indicates the number of repeated cycles, is first set to zero. Then, the meter microcomputer 10 obtains the gradient value (G) detected by the acceleration sensor 28 via the ABS control microcomputer 26 and stores the obtained value as an initial value ($G_0$) of the average gradient value ($G_n$) (step S72). On the other hand, if it is determined that the accessory terminal 12a is not in the ON state at the step S71, the determination at the step S71 is repeated until it is determined that the accessory terminal 12a is in the ON state. More specifically, the meter microcomputer 10 detects an engine start, based on the results of determinations at the steps S70 and S71.

Next, the meter microcomputer 10 determines whether the road is a downhill or not, based on the average gradient value set at the step S72 (step S73). Although only the downhill is determined at this step in this embodiment, an uphill may be determined in accordance with the characteristics of the fuel tank 16.

If it is determined that the road is the downhill at the step S73, it is then determined whether the value obtained by subtracting the quantity ($F_{n-1}$) of the remaining fuel stored immediately before the previous turn-OFF operation of the ignition terminal 12b from the quantity (F) of the remaining fuel detected by the fuel quantity detection devices 18a and 18b exceeds the predetermined value (14, in this embodiment) or not (step S74).

If the value obtained by subtracting the remaining fuel quantity stored immediately before the previous turn-OFF operation of the ignition terminal 12b from the remaining fuel quantity detected by the fuel quantity detection devices 18a and 18b exceeds the predetermined value at the step S74, the meter microcomputer 10 determines that the fuel was fed between the previous turn-OFF operation and the current turn-ON operation of the ignition terminal 12b. On the other hand, if the value does not exceed the predetermined value at the step S74, the meter microcomputer 10 determines that no fuel was fed between the previous turn-OFF operation and the current turn-ON operation of the ignition terminal 12b.

Next, if it is determined that the fuel was fed at the step S74, the meter microcomputer 10 displays the value (F) indicating the remaining fuel quantity detected by the fuel quantity detection devices 18a and 18b on the fuel quantity display meter 24 (step S75). On the other hand, if it is determined that no fuel was fed at the step S74, the meter microcomputer 10 displays the value ($F_{n-1}$) indicating the remaining fuel quantity stored immediately before the previous turn-OFF operation of the ignition terminal 12b, on the fuel quantity display meter 24 (step S76).

On the other hand, if it is determined that the road is not the downhill at the step S73, it is determined whether the value obtained by subtracting the quantity ($F_{n-1}$) of the remaining fuel stored immediately before the previous turn-OFF operation of the ignition terminal 12b from the quantity (F) of the remaining fuel detected by the fuel quantity detection devices 18a and 18b exceeds the predetermined value (in this embodiment, 4) or not (step S77).

If the value obtained by subtracting the remaining fuel quantity stored immediately before the previous turn-OFF operation of the ignition terminal 12b from the remaining fuel quantity detected by the fuel quantity detection devices 18a and 18b exceeds the predetermined value at the step S77, the meter microcomputer 10 determines that the fuel was fed between the previous turn-OFF operation of the ignition terminal 12b and the current engine start. On the other hand, if the-value does not exceed the predetermined value at the step S77, the meter microcomputer 10 determines that no fuel was fed between the previous engine start and the current turn-ON operation of the ignition terminal 12b.

Next, if it is determined that the fuel was fed at the step S77, the meter microcomputer 10 displays the quantity (F) of the remaining fuel detected by the fuel quantity detection devices 18a and 18b on the fuel quantity display meter 24 (step S78). On the other hand, if it is determined that no fuel was fed at the step S77, the meter microcomputer 10 displays the value ($F_{n-1}$) representing the remaining fuel quantity stored immediately before the previous turn-OFF operation of the ignition terminal 12b, on the fuel quantity display meter 24 (step S79).

Next, the meter microcomputer 10 determines whether the road is flat or not, based on the average gradient value ($G_n$) set at the step S72 (step S80). If it is determined that the road is flat at the step S80, the value obtained by adding the remaining fuel quantity newly detected by the fuel quantity detection devices 18a and 18b to the remaining fuel quantity displayed on the fuel quantity display meter 24 and averaging thereof is displayed on the fuel quantity display meter 24 (step S81). On the other hand, if it is determined that the road is not flat at the step S80, the value obtained by subtracting the quantity of fuel consumed after the previous processing, which is obtained from the engine control microcomputer 22, from the remaining fuel quantity displayed on the fuel quantity display meter 24 is displayed on the fuel quantity display meter 24 (step S82).

Next, the meter microcomputer 10 determines whether the vehicle starts running or not, based on a vehicle speed detected by the speed sensor 30 (step S83). If it is determined that the vehicle is running at the step S83, the value of the suffix n is first increased by 1. Then, the value obtained by adding the estimated gradient value (G) detected by the acceleration sensor 28 and obtained through the ABS control microcomputer 26 to the previously stored average gradient value ($G_{n-1}$) and then averaging them is regarded as a new average gradient value ($G_n$) (step S84). More specifically, the average gradient value ($G_n$) is calculated by the following Formula 1.

[Formula 1]

$$G_n = \{G_{n-1} \times (N-1) + G\}/N$$

where N is a time constant (in this embodiment, N = 2000).

On the other hand, if it is determined that the vehicle is not running at the step S83, the meter microcomputer 10 returns to the step S80 so as to repeat the operations at the steps S80 to S83 until it is determined that the vehicle is running at the step S83.

Next, the meter microcomputer 10 determines whether the road is flat or not, based on the average gradient value calculated at the step S84 (step S85). If it is determined that the road is flat at the step S85, the meter microcomputer 10 adds a value newly detected by the fuel quantity detection devices 18a and 18b to the remaining fuel quantity displayed on the fuel quantity display meter 24 to average them so as to display the obtained value on the fuel quantity display meter 24 (step S86). On the other hand, if it is determined that the road is not flat at the step S85, the meter microcomputer 10 displays the value obtained by subtracting the quantity of fuel consumed after the previous processing, which is obtained from the engine control microcomputer 22, from the remaining fuel quantity displayed on the fuel quantity display meter 24 (step S87).

Next, the meter microcomputer 10 determines whether the vehicle is stopped based on the speed detected by the speed sensor 30 (step S88). If it is determined that the vehicle is stopped at the step S88, the counter (C) is initialized to zero so as to detect the number of resets of the average gradient value (Fig. 8, step S89). Then, after the timer (T) is initialized to zero so as to measure the amount of a vehicle stop time (step S90), a timer operation is started (step S91). On the other hand, if it is determined that the vehicle is running at the step S88, the procedure returns to the step S84 so as to repeat the operations at the steps S84 to S88 until it is determined that the vehicle is stopped at the step S88.

Next, the meter microcomputer 10 increases the value of "n" by 1 so as to determine whether the counter (C) indicates 1 or not (step S92). If it is determined that the counter (C) indicates 1 at the step S92, the value obtained by adding the estimated gradient value detected by the acceleration sensor 28 and obtained through the ABS control microcomputer 26 to the average gradient value stored at the step S84 and then averaging them is regarded as a new average gradient value (step S93). More specifically, the new average gradient value is calculated by the above-described Formula 1.

On the other hand, if it is determined that the counter (C) does not indicate 1 at the step S92, the meter microcomputer 10 determines whether six seconds elapsed or not after the timer operation starts (step S94).

If it is determined that six seconds elapsed after the timer operation starts, the average gradient value is reset (step S95). More specifically, an average value ($G_{AVE}$), which are detected by the acceleration sensor 28 and obtained through the ABS control microcomputer 26 within four to five seconds after the vehicle stop, is reset as a new average gradient value ($G_n$). Then, the counter (C) is set to 1 (step S96).

On the other hand, if it is determined that six seconds did not elapse at the step S94, the meter microcomputer 10 adds the estimated gradient value, which is detected by the acceleration sensor 28 and obtained through the ABS control microcomputer 26, to the average gradient value calculated at the step S84 and then averages them. The obtained value is regarded as a new average gradient value (step S93). More specifically, the average gradient value is calculated by the above-described Formula 1.

Next, the meter microcomputer 10 determines whether the road is flat or not, based on the average gradient value set at the step S93 or the step S95 (step S97). If it is determined that the road is flat at the step S97, the value obtained by adding the remaining fuel quantity newly detected by the fuel quantity detection devices 18a and 18b to the remaining fuel quantity displayed on the fuel quantity display meter 24 and then averaging them is displayed on the fuel quantity display meter 24 (step S98).

On the other hand, if it is determined that the road is not flat at the step S97, the value obtained by subtracting the quantity of fuel consumed after the previous processing, which is obtained from the engine control microcomputer 22, from the remaining fuel quantity is displayed on the fuel quantity display meter 24 (step S99).

Next, the meter microcomputer 10 determines whether the vehicle is running, based on the vehicle speed detected by the speed sensor 30 (step S100). If it is determined that the vehicle is running at the step S100, the procedure returns to the step S84 so as to repeat the operations from the step S84 to the step S100 until it is determined that the vehicle is stopped at the step S88.

On the other hand, if it is determined that the vehicle is not running at the step S100, the process returns to the step S92 so as to repeat the operations from the step S93 to the step S100 until it is determined that the vehicle is running at the step S100.

The meter microcomputer 10 stores the remaining fuel quantity displayed on the fuel quantity display meter 24 immediately before the turn-OFF operation of the ignition terminal 12b. If it is determined that the ignition terminal 12b is in the OFF state, the operation of the fuel quantity display device 6 is terminated.

According to the fuel quantity display device of the fourth embodiment, when the vehicle stops after it once starts running, the average gradient value is reset. Therefore, since a time delay, which may otherwise be generated at the averaging of the average gradient values, can be prevented from being generated, an accurate quantity of the remaining fuel can be detected. Moreover, a time constant used for calculation of the average gradient value is performed to remove any changes in acceleration before and after the stop. Since the average gradient value is initialized at the vehicle stop, the time constant can be set to a large value. Therefore, since the effects of a change in the acceleration before and after the stop can be reduced, the precise quantity of the remaining fuel can be detected.

Moreover, according to the fuel quantity display device of the fourth embodiment, when a vehicle stop lasts six seconds, the average gradient value at the point about one or two seconds before that point is reset as a new average gradient value. Therefore, since the effects of acceleration immediately before the vehicle stop and immediately after the vehicle start or the effects of acceleration due to a time delay when detecting the vehicle start can be eliminated, the precise quantity of the remaining fuel can be displayed.

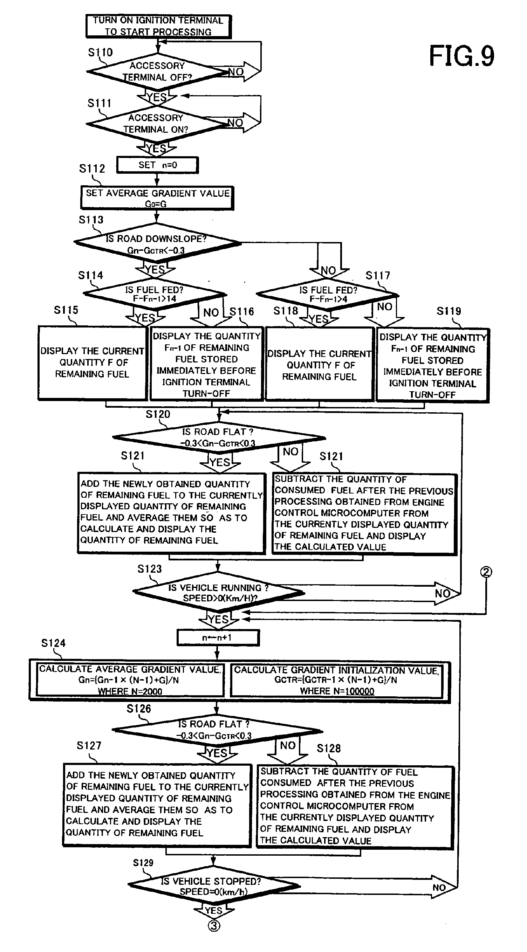

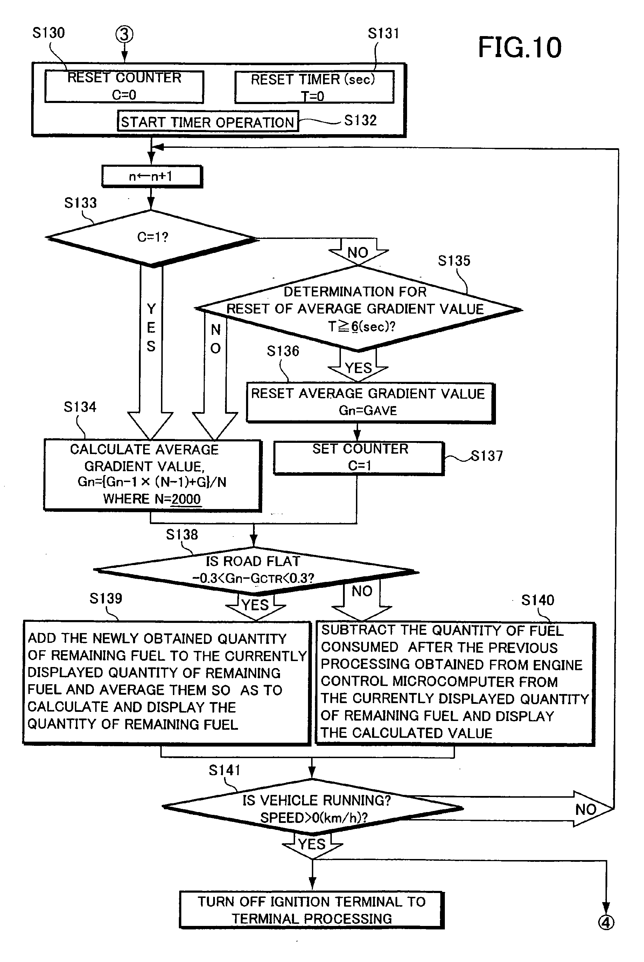

Next, a fuel quantity display device according to a fifth embodiment of the present invention will be described with reference to Figs. 9 and 10. The fuel quantity display device according to the fifth embodiment has the same structure as that of the fuel quantity display device 6 shown in Fig. 6 according to the fourth embodiment.

Next, the operation of the fuel quantity display device according to the fifth embodiment will now be described with reference to flowcharts shown in Figs. 9 and 10.

First, the meter microcomputer 10 determines whether the accessory terminal 12a is turned OFF or not after the ignition terminal 12b is turned ON (step S110). If it is determined that the accessory terminal 12a is in the OFF state at the step S110, the meter microcomputer 10 determines whether the accessory terminal 12a is then turned ON or not (step S111). On the other hand, if it is determined that the accessory terminal 12a is not in the OFF state at the step S110, the determination at the step S110 is repeated until it is determined that the accessory terminal 12a is in the OFF state.

Next, if it is determined that the accessory terminal 12a is in the ON state at the step S111, the value of the suffix n is set to zero. Then, the meter microcomputer 10 obtains the gradient value (G) detected by the acceleration sensor 28 through the ABS control microcomputer and stores the obtained value as an initial value $(G_n)$ (step S112). Next, compared with each other are the value obtained by subtracting the previously obtained gradient initialization value $(G_{CTR})$ from the average gradient value $(G_n)$ set at the step S112 and the predetermined value. The meter microcomputer 10 determines whether the road is the downhill or not, based on the result of comparison (step S113). Although only the downhill is determined at this determination step in this embodiment, the uphill may be determined in accordance with the characteristics of the fuel tank 16.

On the other hand, if it is determined that the accessory terminal 12a is not in the ON state at the step S111, the determination at the step S111 is repeated until it is determined that the accessory terminal 12a becomes the ON state. More specifically, the meter microcomputer 10 detects an engine start, based on the results of determinations at the steps S110 and S111.

If it is determined that the road is the downhill at the step S113, the meter microcomputer 10 compares the value obtained by subtracting the quantity $(F_{n-1})$ of the remaining fuel stored immediately before the previous turn-OFF operation of the ignition terminal 12b from the quantity (F) of the remaining fuel detected by the fuel quantity detection devices 18a and 18b and the predetermined value (in this embodiment, 14) with each other. The microcomputer 10 determines whether the fuel was fed or not between the previous turn-OFF operation of the ignition terminal 12b and the current turn-ON operation of the ignition terminal 12b, based on the result of comparison (step S114). If it is determined that the fuel was fed at the step S114, the meter microcomputer 10 displays the value indicating the remaining fuel quantity detected by the fuel quantity detection devices 18a and 18b on the fuel quantity display meter 24 (step S115).

On the other hand, if it is determined that no fuel was fed at the step S114, the meter microcomputer 10 displays the value indicating the quantity $(F_{n-1})$ of the remaining fuel stored immediately before the previous turn-OFF operation of the ignition terminal 12b on the fuel quantity display meter 24 (step S116).

On the other hand, if it is determined that the road is not the downhill at the step S113, the meter microcomputer 10 compares the value obtained by subtracting the quantity $(F_{n-1})$ of the remaining fuel stored immediately before the previous turn-OFF operation of the ignition terminal 12b from the quantity (F) of the remaining fuel detected by the fuel quantity detection devices 18a and 18b and the predetermined value (in this embodiment, 4) with each other. The meter microcomputer 10 determines whether the fuel was fed or not between the previous turn-OFF operation and the current turn-ON operation of the ignition terminal 12b (step S117). If it is determined that the fuel was fed at the step S117, the meter microcomputer 10 displays the value indicating the remaining fuel quantity detected by the fuel quantity detection devices 18a and 18b on the fuel quantity display meter 24 (step S118).

On the other hand, if it is determined that no fuel was fed at the step S117, the meter microcomputer 10 displays the value indicating the quantity $(F_{n-1})$ of the remaining fuel stored immediately before the previous turn-OFF operation of the ignition terminal 12b on the fuel quantity display meter 24 (step S119).

Next, the meter microcomputer 10 compares the value obtained by subtracting the previously obtained gradient initialization value from the average gradient value stored at the step S112 and the predetermined value with each other. Then, the meter microcomputer 10 determines whether the road is flat or not, based on the result of comparison (step S120). If it is determined that the road is flat at the step S120, a value obtained by adding the remaining fuel quantity newly detected by the fuel quantity detection devices 18a and 18b to the remaining fuel quantity displayed on the fuel quantity display meter 24 and then averaging them is displayed on the fuel quantity display meter 24 (step S121). On the other hand, if it is determined that the road is not flat at the step S120, the value is obtained from the engine control microcomputer 22, and the value is derived by subtracting the quantity of fuel consumed after the previous processing from the remaining fuel quantity displayed on the fuel quantity display meter 24 (step S122).

Next, the meter microcomputer 10 determines if the vehicle starts running or not, based on the vehicle speed detected by the speed sensor 30 (step S123). If it is determined that the vehicle is running at the step S123, the value of the suffix n is increased by 1. Then, the value obtained by adding the estimated gradient value (G) detected by the acceleration sensor 28 and obtained through the ABS control microcomputer 26 to the average gradient value ($G_0$) stored at the step S112, and then averaging them is regarded as a new average gradient value ($G_n$) (step S124). Furthermore, the value obtained by adding the estimated gradient value (G) detected by the acceleration sensor 28 and obtained through the ABS control microcomputer 26 to the previously stored gradient initialization value ($G_{CTR-1}$) is regarded as a new gradient initialization value ($G_{CTR}$) (step S125). A time constant (N) is used for averaging the gradient initialization values at the step S125. And the time constant (N) is set to a value significantly larger than the time constant (N) used for averaging the average gradient values at the step S124. For example, the time constant (N) used for averaging the average gradient values at the step S124 is set to 2000, whereas the time constant (N) used for averaging of the gradient initialization values at the step S125 is set to 10000.

If it is determined that the vehicle is not running at the step S123, the procedure returns to the step S120 so that the meter microcomputer 10 repeats the operations at the steps S120 to S123 until it is determined that the vehicle is running at the step S123.

Next, the meter microcomputer 10 compares the value obtained by subtracting the gradient initialization value ($G_{CTR}$) obtained at the step S125 from the average gradient value ($G_n$) obtained at the step S124 and the predetermined value with each other. Then, the meter microcomputer 10 determines whether the vehicle is running on a flat road or not, based on the result of comparison (step S126).

If it is determined that the vehicle is running on the flat road at the step S126, the value obtained by adding the value newly detected by the fuel quantity detection devices 18a and 18b to the remaining fuel quantity displayed on the fuel quantity display meter 24 and then averaging them is displayed on the fuel quantity display meter 24 (step S127). On the other hand, if it is determined that the vehicle is not running on the flat road at the step S126, the value obtained by subtracting the quantity of fuel consumed after the previous processing, which is obtained from the engine control microcomputer 22, from the remaining fuel quantity displayed on the fuel quantity display meter 24, is displayed on the fuel quantity display meter 24 (step S128).

Next, the meter microcomputer 10 determines whether the vehicle is stopped or not, based on the speed detected by the speed sensor 30 (step S129). If it is determined that the vehicle is stopped at the step S129, the counter (C) is initialized to zero so as to detect the number of reset times of the average gradient value (Fig. 10, step S130). Then, the timer is operated (step S132) after the timer (T) is initialized to zero so as to measure the amount of vehicle stop time (step S131). If it is determined that the vehicle is stopped at the step S129, the procedure returns to the step S124 so as to repeat the operations from the step S124 to the step S129 until it is determined that the vehicle is completely stopped at the step S129.

Next, the value of n is increased by 1. Then, the meter microcomputer 10 determines whether the counter (C) indicates 1 or not (step S133). If it is determined that the counter (C) indicates 1 at the step S133, the value obtained by adding the estimated gradient value (G) detected by the acceleration sensor 28 and obtained through the ABS control microcomputer 26 to the average gradient value ($G_{n-1}$) set at the step S124 and then averaging them is regarded as a new average gradient value ($G_n$) (step S134). More specifically, the average gradient value is calculated by the above-described Formula 1.

On the other hand, if it is determined that the counter (C) does not indicate 1 at the step S133, the meter microcomputer 10 determines whether six seconds elapsed or not after the starting operation of the timer (T) (step S135). If it is determined that six seconds elapsed at the step S135, the average gradient value is reset (step S136). More specifically, an average value ($G_{AVE}$) of the values obtained by the acceleration sensor 28 through the ABS control microcomputer 26 within 4 to 5 seconds after the vehicle stop is reset as a new average gradient value ($G_n$). Then, the counter (C) is set to 1 (step S137).

On the other hand, if it is determined that six seconds do not elapse at the step S135, the meter microcomputer 10 adds the estimated gradient value (G) obtained from the acceleration sensor 28 through the ABS control microcomputer 26 to the average gradient value ($G_{n-1}$) set at the step S124 to average them. Thus obtained value is regarded as a new average gradient value ($G_n$) (step S134). More specifically, the value is calculated by the above-described Formula 1.

Next, the meter microcomputer 10 compares the value obtained by subtracting the gradient initialization value ($G_{CTR}$) stored at the step S125 from the average gradient value ($G_n$) set at the step S134 or S136. The meter microcomputer 10 determines whether the road is flat or not, based on the result of comparison (step S138). If it is determined that the road is flat at the step S138, the value obtained by adding the remaining fuel quantity newly detected by the fuel quantity detection devices 18a and 18b to the remaining fuel quantity displayed on the fuel quantity display meter 24 and averaging thereof is displayed on the fuel quantity display meter 24 (step S139).

On the other hand, the value is obtained from the engine control microcomputer 22. And, if it is determined that the road is not flat at the step S138, the value obtained by subtracting the quantity of fuel consumed after the previous processing from the remaining fuel quantity displayed on the fuel quantity display meter 24 is displayed on the fuel quantity display meter 24 (step S140).

Next, the meter microcomputer 10 determines whether the vehicle starts running or not, based on the speed detected by the speed sensor 30 (step S141). If it is determined that the vehicle is running at the step S141, the procedure returns to the step S124 in Fig. 9 so as to repeat the operations at the steps S124 to S141 until it is determined that the vehicle is stopped at the step S129. On the other hand, if it is determined that the vehicle is not running at the step S141, the procedure returns to the step S133 so as to repeat the operations at the steps S133 to S141 until it is determined that the vehicle is running at the step S141.

The meter microcomputer 10 stores the remaining fuel quantity displayed on the fuel quantity display meter 24 immediately before the previous turn-OFF operation of the ignition terminal 12b. Then, if it is determined that the ignition terminal 12b is in the OFF state, the operation of the fuel quantity display device 6 is terminated.

According to the fuel quantity display device of the fifth embodiment, after the engine start is detected, it is determined whether the road is inclined or not so as to determine the remaining fuel quantity. Therefore, since the occurrence of an error in fuel quantity measurement, which may otherwise be caused by a sudden voltage change upon operation of the starter, can be prevented, the precise quantity of the remaining fuel can be detected. Moreover, since an error generation in the fuel quantity measurement by the fuel quantity detection devices can be prevented when the vehicle is on a slope, the precise quantity of the remaining fuel can be detected. Furthermore, since it can be precisely determined whether the fuel was fed or not when the vehicle is on a slope, the precise quantity of the remaining fuel can be displayed.

Moreover, according to the fuel quantity display device of the fifth embodiment, the value is obtained from the engine control microcomputer. And, the value obtained by subtracting the quantity of fuel consumed after the previous processing from the remaining fuel quantity displayed on the fuel quantity display meter is obtained as the remaining fuel quantity when the vehicle is on the slope, thus the precise quantity of the remaining fuel can be displayed.

Furthermore, according to the fuel quantity display device of the fifth embodiment, it is determined whether the road is the slope or not, based on the value obtained by subtracting the gradient initialization value from the average gradient value. Therefore, since a shift of the point 0 due to a change with an elapse of the time or a variation in parts can be corrected, the precise quantity of the remaining fuel can be detected. Furthermore, even if any trouble occurs in the ABS control microcomputer or the acceleration sensor, the device can be prevented from erroneously determining the road as a slope continuously. Therefore, the precise quantity of the remaining fuel can be detected.

Furthermore, according to the fuel quantity display device of the fifth embodiment, the gradient initialization value is updated only in the case where the vehicle is running. Therefore, since an error of the initialization value, which occurs in the case where the vehicle is stopped and idling for a long time on a slope, can be reduced, the precise quantity of the remaining fuel can be detected.

Furthermore, according to the fuel quantity display device of the fifth embodiment, in the case where the vehicle continues running on the slope for a long time, the average gradient value and the gradient initialization value become equal to each other. Therefore, the remaining fuel quantity is detected without subtracting the quantity of consumed fuel, but by the fuel quantity detection devices. Moreover, the error effects may occur in the case where the remaining fuel quantity is calculated by subtracting the quantity of fuel consumed for a long time. However, the effects of an error corresponding to the quantity of evaporated fuel can be prevented as mentioned above. Thus, a more precise quantity of the remaining fuel can be displayed.

According to the fuel quantity display device of the fifth embodiment, an engine start is detected based on the detection of an ON/OFF state of the ignition switch and the accessory terminal 12a. Therefore, since the operations from the step S110 to the step S123 in Fig. 9 can be performed even if the engine cannot be started, the precise quantity of the remaining fuel can be displayed.

According to the present invention, since the occurrence of an error in fuel quantity measurement due to a sudden voltage change upon an operation of the starter can be prevented, the precise quantity of the remaining fuel can be detected and displayed. Moreover, in the case where it is determined that the vehicle is situated on the slope based on a calculated average gradient value, a gradient can be precisely determined.

Moreover, in the case where the vehicle is situated on the slope for a long time, or in the case where any trouble occurs in obtainment of an estimated gradient value, the precise quantity of the remaining fuel with few errors can be displayed. Moreover, it can be precisely determined whether the fuel was fed or not, based on the result of determination whether the vehicle is situated on the slope or a flat surface. Furthermore, since the remaining fuel quantity can be calculated based on the result of precise determination of fueling, the precise quantity of the remaining fuel can be displayed.

**Claims**

1. A fuel quantity display device (2) comprising:

   engine start detection means (10) for detecting an engine start;
   fuel quantity detection means (18a,18b) for detecting a quantity of a remaining fuel in a fuel tank (16); and
   fuel quantity display means (24) for displaying the remaining fuel quantity on the basis of the quantity detected by the fuel quantity detection means (18a,18b), wherein
   the remaining fuel quantity is detected by the fuel quantity detection means (18a,18b) after the detection of the engine start by the engine start detection means (10).

2. The fuel quantity display device (2) according to claim 1, further comprising:

   fueling determination means (10) for determining whether fuel is fed or not;
   gradient value determination means (10) for determining a gradient value of a road; and
   fuel quantity correction means (10) for correcting the quantity displayed on the basis of the determination result by the fueling determination means (10) in accordance with the determination result by the gradient value determination means (10), wherein
   the remaining fuel quantity corrected by the fuel quantity correction means (10) is displayed on the fuel quantity display means (24).

3. The fuel quantity display device (2) according to claim 1 or 2, wherein:

   the engine start detection means (10) detects the engine start based on switching an accessory terminal (12a) from OFF to ON after an ignition terminal (12b) is turned ON.

4. The fuel quantity display device (2) according to claim 1 or 2, wherein:

   the engine start detection means (10) detects the engine start based on switching a starter terminal (12c) from ON to OFF after an ignition terminal (12b) is turned ON.

5. The fuel quantity display device (2) according to any one of claims 2 to 4, wherein:

   the gradient value determination means (10) detects the gradient value of the road on the basis of any one of an estimated gradient value obtained from a detected value of an acceleration sensor (28) for an anti-lock brake system and an estimated gradient value obtained from a microcomputer (20) for automatic transmission control.

6. A fuel quantity display device (2) comprising:

   fuel quantity detection means (18a,18b) for detecting a quantity of a remaining fuel in a fuel tank (6);
   fuel quantity display means (24) for displaying the quantity;
   average gradient value calculation means (10) for calculating an average gradient value of a road;
   flat plane determination means (10) for determining whether the road is flat or not on the basis of the average gradient value; and
   fuel quantity correction means (10) for correcting the remaining fuel quantity displayed on the fuel quantity display means (24), based on the remaining fuel quantity detected by the fuel quantity detection means (18a,18b), and based on the result of determination by the flat plane determination means (10), wherein
   the quantity corrected by the fuel quantity correction means (10) is displayed on the fuel quantity display means (24).

7. The fuel quantity display device (2) according to claim 6, further comprising:

   vehicle stop detection means (10) for detecting a vehicle stop; and
   average gradient value initialization means (10) for initializing the average gradient value when the vehicle stop is detected.

8. The fuel quantity display device (2) according to claim 7, wherein:

   the average gradient value initialization means (10) initializes the average gradient value after an elapse of a predetermined period of time from the vehicle stop.

**9.** The fuel quantity display device (2) according to claim 8, wherein

the average gradient value initialization means (10) initializes the average gradient value with an average gradient value calculated within a certain period of time before the point of an initialization.

**10.** The fuel quantity display device (2) according to any one of claims 6 to 9, wherein

the average gradient value initialization means (10) initializes the average gradient value only once during the vehicle stop.

**11.** The fuel quantity display device (2) according to any one of claims 6 to 10, wherein

the average gradient value calculation means (10) calculates the average gradient value on the basis of an estimated gradient value obtained from a detected value of an acceleration sensor (28) for an anti-lock brake system.

**12.** A fuel quantity display device (2) comprising:

fuel quantity detection means (18a,18b) for detecting a quantity of the remaining fuel in a fuel tank (6);

fuel quantity display means (24) for displaying the quantity;

average gradient value calculation means (10) for calculating an average gradient value of a road;

slope determination means (10) for determining whether the vehicle is situated on a slope for a predetermined period of time or not on the basis of the average gradient value; and

fuel quantity correction means (10) for correcting the quantity displayed on the fuel quantity display means (24) on the basis of the quantity detected by the fuel quantity detection means (18a,18b) when the slope determination means (10) determines that the vehicle is on the slope for more than the predetermined long period of time, wherein

the quantity corrected by the fuel quantity correction means (10) is displayed on the fuel quantity display means (24).

**13.** The fuel quantity display device (2) according to claim 12, wherein

the fuel quantity correction means (10) changes a method of calculating the remaining fuel quantity from that based on the quantity of fuel injection to that based on the detection of the remaining fuel quantity in the fuel tank so as to correct the remaining fuel quantity displayed on the fuel quantity display means (24).

**14.** The fuel quantity display device (2) according to claim 12 or 13, wherein:

the slope determination means (10) determines whether the vehicle is on the slope or not on the basis of two average gradient values, each having a different time constant.

**15.** The fuel quantity display device (2) according to any one of claims 12 to 14, wherein:

the average gradient value calculation means (10) calculates an average gradient value of the road on the basis of any one of an estimated gradient value estimated from a detected value of an acceleration sensor (28) for an anti-lock brake system and an estimated gradient value obtained from a microcomputer (20) for automatic transmission control.

**16.** A fuel quantity display device (2) comprising:

gradient determination means (10) for determining a gradient of a road;

fueling determination means (10) for determining whether a fuel is fed or not in a fuel tank (6) by using different criteria for a case where the road is determined as a slope and for a case where the road is determined as flat on the basis of the result of determination by the gradient determination means (10);

fuel quantity calculation means (10) for obtaining the remaining fuel quantity in the fuel tank on the basis of the result of determination by the fueling determination means (10); and

fuel quantity display means (24) for displaying the remaining fuel quantity obtained by the fuel quantity calculation means (10).

**17.** The fuel quantity display device (2) according to claim 16, wherein:

the gradient determination means (10) determines a gradient of the road on the basis of an estimated gradient value obtained from a detected value of an acceleration sensor (28) for an anti-lock brake system or an estimated gradient value obtained from a microcomputer (20) for automatic transmission control.

**18.** The fuel quantity display device (2) according to any one of claims 1 to 11, wherein:

the fuel quantity correction means (10) uses the quantity detected by the fuel quantity detection means (18a, 18b) as a corrected quantity of the remaining fuel in a case where it is determined that the fuel is fed, and uses the quantity of remaining fuel stored immediately before the previous turn-OFF operation of the ignition terminal (12b) as the corrected quantity of the remaining fuel in a case where it is determined that no fuel is fed.

19. The fuel quantity display device (2) according to any one of claims 1 to 11 or 18, wherein:

the fuel quantity correction means (10) uses, as the corrected quantity of the remaining fuel, a value obtained by adding a quantity of the remaining fuel newly detected by the fuel quantity detection means (18a, 18b) to the remaining fuel quantity displayed by the fuel quantity display means (24) and averaging them if the gradient value determined by the gradient value determination means (10) does not exceed a predetermined value, and uses, as the corrected quantity of the remaining fuel, a value obtained by subtracting the quantity of fuel consumed after a previous processing, which is obtained from engine control means (22), from the remaining fuel quantity displayed by the fuel quantity display means (24) if the gradient value determined by the gradient value determination means (10) exceeds the predetermined value.

EP 1 434 040 A2

# FIG.1

24

2

12a

ACCESSORY TERMINAL

IGNITION SWITCH

14

IGNITION TERMINAL

12b

12

10

METER MICROCOMPUTER

ENGINE CONTROL MICROCOMPUTER

AT CONTROL MICROCOMPUTER

22

20

18a

18b

16

FIG.2

START

S10 IGNITION TERMINAL ON? → NO

↓ YES

S11 ACCESSORY TERMINAL OFF? → NO

↓ YES

S12 ACCESSORY TERMINAL ON? → NO

↓ YES

S13 OBTAIN THE CURRENT QUANTITY OF REMAINING FUEL

S14 IS FUEL FED ?

S15 ← YES / NO → S16

S15 DISPLAY THE CURRENT QUANTITY OF REMAINING FUEL

S16 DISPLAY THE QUANTITY OF REMAINING FUEL STORED IMMEDIATELY BEFORE IGNITION TERMINAL TURN-OFF

S17 IS GRADIENT OF ROAD A PREDETERMINED VALUE OR MORE ?

YES ↓ / NO ↓ S20

S18 SUBTRACT THE QUANTTITY OF FUEL CONSUMED AFTER THE PREVIOUS PROCESSING, OBTAINED FROM ENGINE CONTROL MICROCOMPUTER, FROM THE CURRENTLY DISPLAYED QUANTITY OF REMAINING FUEL AND DISPLAY THE OBTAINED VALUE

S20 ADD THE NEWLY OBTAINED QUANTITY OF REMAINING FUEL TO THE CURRENTLY DISPLAYED QUANTITY OF REMAINING FUEL AND AVERAGE THEM SO AS TO CALCULATE AND DISPLAY THE QUANTITY OF REMAINING FUEL

S19 STORE THE CURRENTLY DISPLAYED QUANTITY OF REMAINING FUEL

S21 IGNITION TERMINAL OFF? → NO

↓ YES

END

# FIG.3

STARTER TERMINAL

IGNITION SWITCH

IGNITION TERMINAL

METER MICROCOMPUTER

ENGINE CONTROL MICROCOMPUTER

AT CONTROL MICROCOMPUTER

FIG.4

START

**S30** IGNITION TERMINAL ON? — NO

YES

**S31** STARTER TERMINAL ON? — NO

YES

**S32** STARTER TERMINAL OFF? — NO

YES

**S33** OBTAIN THE CURRENT QUANTITY OF REMAINING FUEL

**S34** IS FUEL FED ?

YES / NO

**S35** DISPLAY THE CURRENT QUANTITY OF REMAINING FUEL

**S36** DISPLAY THE QUANTITY OF REMAINING FUEL STORED IMMEDIATELY BEFORE IGNITION TERMINAL TURN-OFF

**S37** ADD CURRENT ESTIMATED GRADIENT VALUE OBTAINED FROM AT CONTROL MICROCOMPUTER TO AVERAGE GRADIENT VALUE OBTAINED BY THE PREVIOUS PROCESSING AND AVERAGE THEM SO AS TO OBTAIN NEW AVERAGE GRADIENT VALUE

**S38** IS CALULATED AVERAGE GRADIENT VALUE A PREDETERMINED VALUE OR MORE ?

YES / NO

**S39** SUBTRACT THE QUANTTITY OF FUEL CONSUMED AFTER THE PREVIOUS PROCESSING OBTAINED FROM ENGINE CONTROL MICROCOMPUTER FROM THE CURRENTLY DISPLAYED QUANTITY OF REMAINING FUEL SO AS TO DISPLAY THE OBTAINED VALUE

**S41** ADD THE NEWLY OBTAINED QUANTITY OF REMAINING FUEL TO THE CURRENTLY DISPLAYED QUANTITY OF REMAINING FUEL AND AVERAGE THEM SO AS TO CALCULATE AND DISPLAY THE QUANTITY OF REMAINING FUEL

**S40** STORE THE CURRENTLY DISPLAYED QUANTITY OF REMAINING FUEL

**S42** IGNITION TERMINAL OFF? — NO

YES

END

EP 1 434 040 A2

# FIG.5

**START**

**S50** — IGNITION TERMINAL ON? — NO

YES

**S51** — STARTER TERMINAL ON? — NO

YES

**S52** — STARTER TERMINAL OFF? — NO

**S53** YES

OBTAIN THE CURRENT QUANTITY OF REMAINING FUEL

**S54** — IS FUEL FED ?

**S55** YES — NO — **S56**

DISPLAY THE CURRENT QUANTITY OF REMAINING FUEL

DISPLAY THE QUANTITY OF REMAINING FUEL STORED IMMEDIATELY BEFORE IGNITION TERMINAL TURN-OFF

**S57**
ADD CURRENT ESTIMATED GRADIENT VALUE OBTAINED FROM AT CONTROL MICROCOMPUTER TO GRADIENT VALUE OBTAINED BY THE PREVIOUS PROCESSING AND AVERAGE THEM SO AS TO OBTAIN NEW AVERAGE GRADIENT VALUE

**S58**
ADD CURRENT ESTIMATED GRADIENT VALUE OBTAINED FROM AT CONTROL MICROCOMPUTER TO PREVIOUSLY PROCESSED INITIALIZATION VALUE AND AVERAGE THEM SO AS TO OBTAIN NEW INITIALIZATION VALUE

**S59** — IS AVERAGE GRADIENT VALUE-INITIALIZATION VALUEA PREDETERMINED VALUE OR MORE ?

**S60** YES — NO — **S62**

SUBTRACT THE QUANTITY OF CONSUMED FUEL AFTER THE PREVIOUS PROCESSING OBTAINED FROM ENGINE CONTROL MICROCOMPUTER FROM THE CURRENTLY DISPLAYED QUANTITY OF REMAINING FUEL SO AS TO DISPLAY THE CALCULATED VALUE

ADD THE NEWLY OBTAINED QUANTITY OF REMAINING FUEL TO THE CURRENTLY DISPLAYED QUANTITY OF REMAINING FUEL AND AVERAGE THEM SO AS TO CALCULATE AND DISPLAY THE QUANTITY OF REMAINING FUEL

STORE THE CURRENTLY DISPLAYED QUANTITY OF REMAINING FUEL — **S61**

**S63** — IGNITION TERMINAL OFF? — NO

YES

**END**

21

# FIG.6

SPEED SENSOR

METER MICROCOMPUTER

ACCESSORY TERMINAL

IGNITION TERMINAL

IGNITION SWITCH

ENGINE CONTROL MICROCOMPUTER

ABS CONTROL MICROCOMPUTER

LONGITUDINAL ACCELERATION SENSOR

# FIG.7

TURN ON IGNITION TERMINAL
TO START PROCESSING

S70 ACCESSORY TERMINAL OFF? — NO

YES

S71 ACCESSORY TERMINAL ON? — NO

YES

SET n=0

S72 SET AVERAGE GRADIENT VALUE $G_0=G$

S73 DOWNSLOPE?

YES → S74 IS FUEL FED? $F-F_{n-1}>14$

NO → S77 IS FUEL FED? $F-F_{n-1}>4$

**S75** (YES) DISPLAY CURRENT QUANTITY F OF REMAINING FUEL

**S76** (NO) DISPLAY QUANTITY $F_{n-1}$ OF REMAINING FUEL STORED IMMEDIATELY BEFORE IGNITION TERMINAL TURN-OFF

**S78** (YES) DISPLAY THE CURRENT QUANTITY F OF REMAINING FUEL

**S79** (NO) DISPLAY THE QUANTITY $F_{n-1}$ OF REMAINING FUEL STORED IMMEDIATELY BEFORE IGNITION TERMINAL TURN-OFF

S80 IS ROAD FLAT ?

YES → S81 ADD THE NEWLY OBTAINED QUANTITY OF REMAINING FUEL TO THE CURRENTLY DISPLAYED QUANTITY OF REMAINING FUEL AND AVERAGE THEM SO AS TO CALCULATE AND DISPLAY THE QUANTITY OF REMAINING FUEL

NO → S82 SUBTRACT THE QUANTITY OF FUEL CONSUMED AFTER THE PREVIOUS PROCESSING OBTAINED FROM ENGINE CONTROL MICROCOMPUTER FROM THE CURRENTLY DISPLAYED QUANTITY OF REMAINING FUEL AND DISPLAY THE OBTAINED VALUE

S83 IS VEHICLE RUNNING ? SPEED>0(KmQ/H)? — NO → ②

YES

$n \leftarrow n+1$

S84 CALCULATE AVERAGE GRADIENT VALUE, $G_n=\{G_{n-1} \times (N-1)+G\}/N$ WHERE N=2000

S85 IS ROAD FLAT ?

YES → S86 ADD THE NEWLY OBTAINED QUANTITY OF REMAINING FUEL TO THE CURRENTLY DISPLAYED QUANTITY OF REMAINING FUEL AND AVERAGE THEM SO AS TO CALCULATE AND DISPLAY THE QUANTITY OF REMAINING FUEL

NO → S87 SUBTRACT THE QUANTITY OF FUEL CONSUMED AFTER THE PREVIOUS PROCESSING OBTAINED FROM ENGINE CONTROL MICROCOMPUTER FROM THE CURRENTLY DISPLAYED QUANTITY OF REMAINING FUEL AND DISPLAY THE OBTAINED VALUE

S88 IS VEHICLE STOPPED? SPEED=0(km/h) — NO

YES

①

23

# FIG.8

① →

**RESET COUNTER C=0** — S89

**RESET TIMER (sec) T=0** — S90

**START TIMER OPERATION** — S91

$n \leftarrow n+1$

S92

**C=1?** — NO

YES / NO

S94

**DETERMINATION FOR RESET OF AVERAGE GRADIENT VALUE $T \geqq \underline{6}(sec)$?** — YES

S95

**RESET AVERAGE GRADIENT VALUE Gn=GAVE**

S93

**CALCULATE AVERAGE GRADIENT VALUE, Gn=[Gn−1 × (N−1)+G]/N WHERE N=2000**

**SET COUNTER C=1** — S96

S97

**IS ROAD FLAT ?** — YES / NO

S98

**ADD THE NEWLY OBTAINED QUANTITY OF REMAINING FUEL TO THE CURRENTLY DISPLAYED QUANTITY OF REMAINING FUEL AND AVERAGE THEM SO AS TO CALCULATE AND DISPLAY THE QUANTITY OF REMAINING FUEL**

S99

**SUBTRACT THE QUANTITY OF FUEL CONSUMED AFTER THE PREVIOUS PROCESSING OBTAINED FROM ENGINE CONTROL MICROCOMPUTER FROM THE CURRENTLY DISPLAYED QUANTITY OF REMAINING FUEL AND DISPLAY THE CALCULATED VALUE**

S100

**IS VEHICLE RUNNING? SPEED>0(km/h)?** — NO → ②

YES

**TURN OFF IGNITION TERMINAL AND TERMINATE PROCESSING**

# FIG.9

TURN ON IGNITION TERMINAL
TO START PROCESSING

S110 — ACCESSORY TERMINAL OFF? → NO

YES

S111 — ACCESSORY TERMINAL ON? → NO

YES

S112 — SET n=0

SET AVERAGE GRADIENT VALUE
$G_0=G$

S113 — IS ROAD DOWNSLOPE?
$G_n-G_{CTR}<-0.3$ → NO → S117

YES

S114 — IS FUEL FED?
$F-F_{n-1}>14$ → NO → S116

YES → S115

S117 — IS FUEL FED?
$F-F_{n-1}>4$ → NO → S119

YES → S118

**S115** DISPLAY THE CURRENT QUANTITY F OF REMAINING FUEL

**S116** DISPLAY THE QUANTITY $F_{n-1}$ OF REMAINING FUEL STORED IMMEDIATELY BEFORE IGNITION TERMINAL TURN-OFF

**S118** DISPLAY THE CURRENT QUANTITY F OF REMAINING FUEL

**S119** DISPLAY THE QUANTITY $F_{n-1}$ OF REMAINING FUEL STORED IMMEDIATELY BEFORE IGNITION TERMINAL TURN-OFF

S120 — IS ROAD FLAT ?
$-0.3<G_n-G_{CTR}<0.3$ → NO → S121

YES → S121

**S121** ADD THE NEWLY OBTAINED QUANTITY OF REMAINING FUEL TO THE CURRENTLY DISPLAYED QUANTITY OF REMAINING FUEL AND AVERAGE THEM SO AS TO CALCULATE AND DISPLAY THE QUANTITY OF REMAINING FUEL

**S121** SUBTRACT THE QUANTITY OF CONSUMED FUEL AFTER THE PREVIOUS PROCESSING OBTAINED FROM ENGINE CONTROL MICROCOMPUTER FROM THE CURRENTLY DISPLAYED QUANTITY OF REMAINING FUEL AND DISPLAY THE CALCULATED VALUE

S123 — IS VEHICLE RUNNING ?
SPEED>0(Km/H)? → NO → ②

YES

$n \leftarrow n+1$

**S124** CALCULATE AVERAGE GRADIENT VALUE,
$G_n=[G_{n-1} \times (N-1)+G]/N$
WHERE N=2000

CALCULATE GRADIENT INITIALIZATION VALUE,
$G_{CTR}=[G_{CTR-1} \times (N-1)+G]/N$
WHERE N=100000

S126 — IS ROAD FLAT ?
$-0.3<G_n-G_{CTR}<0.3$ → NO → S128

YES → S127

**S127** ADD THE NEWLY OBTAINED QUANTITY OF REMAINING FUEL TO THE CURRENTLY DISPLAYED QUANTITY OF REMAINING FUEL AND AVERAGE THEM SO AS TO CALCULATE AND DISPLAY THE QUANTITY OF REMAINING FUEL

**S128** SUBTRACT THE QUANTITY OF FUEL CONSUMED AFTER THE PREVIOUS PROCESSING OBTAINED FROM THE ENGINE CONTROL MICROCOMPUTER FROM THE CURRENTLY DISPLAYED QUANTITY OF REMAINING FUEL AND DISPLAY THE CALCULATED VALUE

S129 — IS VEHICLE STOPPED?
SPEED=0(km/h) → NO

YES

③

25

FIG.10

S130   ③                                    S131

RESET COUNTER            RESET TIMER (sec)
C=0                       T=0

START TIMER OPERATION —— S132

n←n+1

S133

C=1? ————→ NO

S135

DETERMINATION FOR
RESET OF AVERAGE GRADIENT VALUE
T ≧ 6(sec)?

Y E S        N O          S136        YES

RESET AVERAGE GRADIENT VALUE
Gn=GAVE

S134

CALCULATE AVERAGE          SET COUNTER          S137
GRADIENT VALUE,            C=1
Gn={Gn-1 × (N-1)+G}/N
WHERE N=2000

S138

IS ROAD FLAT
-0.3<Gn-GcTR<0.3?

S139          YES                    NO          S140

ADD THE NEWLY OBTAINED QUANTITY      SUBTRACT THE QUANTITY OF FUEL
OF REMAINING FUEL TO THE CURRENTLY   CONSUMED  AFTER THE PREVIOUS
DISPLAYED QUANTITY OF REMAINING      PROCESSING OBTAINED FROM ENGINE
FUEL AND AVERAGE THEM SO  AS TO      CONTROL MICROCOMPUTER FROM
CALCULATE AND DISPLAY THE            THE CURRENTLY DISPLAYED QUANTITY
QUANTITY OF REMAINING FUEL           OF REMAINING FUEL AND DISPLAY
                                     THE CALCULATED VALUE

S141

IS VEHICLE RUNNING?
SPEED>0(km/h)? ————→ NO

YES

TURN OFF IGNITION TERMINAL TO
TERMINAL PROCESSING                              ④